# EUROPÄISCHE PATENTSCHRIFT

(11) **EP 2 585 377 B1**
(45) Veröffentlichungstag und Bekanntmachung des Hinweises auf die Patenterteilung: **13.04.2016**
(21) Anmeldenummer: 11797176.2
(22) Anmeldetag: 07.06.2011
(51) Int. Cl.: B65D 1/02, B65D 83/00

(54) **BEHÄLTER MIT INNENBEUTEL**
CONTAINER HAVING AN INNER BAG
CONTENANT COMPORTANT UN SAC INTÉRIEUR

(30) Priorität: 24.06.2010 DE 102010024980
(43) Veröffentlichungstag der Anmeldung: 01.05.2013
(73) Patentinhaber: Gaplast GmbH, 82442 Altenau (DE)
(72) Erfinder: KNEER, Roland, 82490 Farchant (DE)
(74) Vertreter: Flosdorff, Jürgen
(86) Internationale Anmeldenummer: PCT/DE2011/001387
(87) Internationale Veröffentlichungsnummer: WO 2012/000491

(56) Entgegenhaltungen:
- EP-A2- 0 182 094
- WO-A1-98/01366
- FR-A3- 2 922 145
- GB-A- 1 601 424

## Beschreibung

Die Erfindung betrifft einen im Coextrusionsblasverfahren hergestellten Behälter, bestehend aus einem im wesentlichen steifen Außenbehälter und einem leicht verformbaren Innenbeutel aus jeweils verschiedenartigen, keine Schweißverbindung miteinander eingehenden thermoplastischen Kunststoffen, mit einer Behälteröffnung und mit wenigstens zwei Druckausgleichsöffnungen in der Wand des Außenbehälters zum Druckausgleich im Zwischenraum zwischen dem Außenbehälter und dem Innenbeutel bei Kontraktion des Innenbeutels, wobei beim Abquetschen von Überschussmaterial am Boden der Blasform der Innenbeutel durch eine Bodenschweißnaht verschlossen und diese Bodenschweißnaht in eine ebenfalls verschlossene Bodenschweißnaht des Außenbehälters eingeklemmt ist, wobei zu beiden Seiten der Bodenschweißnaht wenigstens eine Druckausgleichsöffnung ausgebildet ist und alle Druckausgleichsöffnungen an Stellen des Außenbehälters ausgebildet sind, die gegenüber den Schnittlinien einer durch die Bodenschweißnaht und die Längsmittelachse des Behälters verlaufende Ebene mit der Umfangswand des Außenbehälters und des Innenbeutels in Umfangsrichtung versetzt sind, so dass bei Abgabe des Behälterinhalts der Innenbeutel sich nur von zwei Seiten zusammen zieht.

Dabei sind die Druckausgleichsöffnungen bevorzugt im Boden oder im Schulterbereich des Außenbehälters ausgebildet, wobei sie sich aber grundsätzlich auch in der Umfangswand des Außenbehälters befinden können.

Die EP 0 182 094 A2 offenbart einen im Koextrusionsblasverfahren hergestellten Behälter, der aus einem im wesentlichen formsteifen Außenbehälter und einem leicht verformbaren Innenbeutel aus jeweils verschiedenartigen keine Schweißverbindung miteinander eingehenden, thermoplastischen Kunststoffen besteht. Der extrudierte schlauchförmige Vorformling wird nach Erreichen der erforderlichen Länge in einer Blasform aufgeblasen, wobei die beiden thermoplastischen Kunststoffschichten aneinander anliegen. Der Boden des Vorformlings wird von der geschlossenen Blasform abgequetscht, wobei eine Schweißnaht am Innenbehälter ausgebildet wird. Die Schweißnaht des Innenbehälters ist dabei in dem Material des Außenbehälters fixiert, und zwar über die gesamte Breite des Bodens des Behälters. Im mittleren Bereich dieser Quetschnaht ist der Außenbehälter nicht geschlossen, so dass hier Luft in den Zwischenraum zwischen den Innenbeutel und dem Außenbehälter eintreten kann.

Die Druckschrift offenbart ferner, dass die Wanddicke des Innenbeutels an acht gleichmäßig voneinander beabstandeten Stellen nutartige Vertiefungen in der Wand des Innenbeutels haben kann, die Schwachzonen darstellen, durch die der Innenbeutel bei darin herrschendem Unterdruck in Folge der Abgabe von Behälterinhalt sternförmig zusammengezogen wird. Bei einer anderen Ausführungsform hat die Innenkontur des Innenbeutels die Form eines Vielecks, wobei sich der Innenbeutel auch hier sternförmig zusammenfalten soll. Die sternförmige Faltung erfolgt dabei an den Stellen, an denen der Innenbeutel die geringste Wanddicke hat.

Am Boden des Behälters ist der Innenbeutel entlang der Quetschnaht fixiert, die sich entlang des gesamten Durchmessers des Bodens erstreckt. Dies hat zur Folge, dass sich der Innenbeutel im Bereich des Bodens nicht sternförmig zusammenfalten kann, sondern nur in einem beträchtlichen Abstand über dem Boden. Da sich der darüber befindliche Bereich sternförmig zusammengezogen hat, verbleibt im Bodenbereich eine beträchtliche Restmenge des Füllguts, die nur dadurch ausgebracht werden kann, dass die Pumpe des Behälters mit einem bis in die Nähe des Bodens reichenden Steigrohr versehen ist.

Auch bei dem Behälter der GB 1 601 424 zieht sich der Innenbeutel sternförmig zusammen. Anstelle der nutartigen Vertiefungen in der Wand des Innenbeutels sind - hierbei in einer Ausführungsform Verdickungen vorgesehen.

Der vorliegenden Erfindung liegt die Aufgabe zugrunde, einen Behälter der betrachteten Art so weiter zu entwickeln, dass die schließlich in dem Innenbeutel verbleibende, nicht austragbare Restmenge des Behälterinhalts verringert ist.

Diese Aufgabe wird erfindungsgemäß durch die Merkmale der Patentansprüche 1 bis 3 gelöst.

Vorteilhafte Ausgestaltungen der Erfindung sind in den abhängigen Ansprüchen gekennzeichnet.

Die Erfindung sieht nach einem ersten Prinzip vor, dass die Wanddicke des Innenbeutels im Bereich der Schnittlinien größer als in den dazwischen liegenden Umfangsbereichen ist. Dieser Verlauf der Wanddicke erstreckt sich bevorzugt über die gesamte Höhe des Innenbeutels. Dabei ist in einer erfinderischen Ausführung vorgesehen, dass die Wanddicke beidseitig der Schnittlinien über einen vorgegebenen Umfangsabschnitt, der zu beiden Seiten hin dieselbe Länge hat, im wesentlichen konstant ist, um sich anschließend stetig oder sprunghaft zu verringern. Diese Ausbildung hat zur Folge, dass sich der Innenbeutel bei seiner Kontraktion gezielt von dem Außenbehälter ablöst, indem sich zunächst der Umfangsabschnitt verringerter Dicke an einer Seite des Beutels abhebt, woraufhin der gegenüberliegende Umfangsabschnitt verringerter Dicke folgt, bevor der Ablösevorgang sich in den Bereichen unverminderter Dicke fortsetzt. Durch dieses gezielte Zusammenfalten wird erreicht, dass sich der Innenbeutel an beiden Seiten weitestgehend im selben Umfang löst, bis sich die gegenüberliegenden Wandabschnitt im Bereich der eingangs definierten Ebene aneinander anlegen. Dies hat zur Folge, dass nur eine verschwindend geringe Restmenge in dem Innenbeutel verbleibt, die nicht ausbringbar ist.

Das Zusammenfalten des Innenbeutels erfolgt dabei praktisch in zwei Stufen, wobei die Geometrie des Ablösevorgangs durch die Wanddicke des Innenbeutels weitestgehend festlegbar ist. Der Innenbeutel wird durch geeignete Wahl der Wanddicke im Bereich der Schnittlinien so lange an dem Außenbehälter anhaften, bis sich die dazwischen liegenden beidseitigen Umfangsabschnitte vollständig von dem Außenbehälter abgelöst haben, wobei dann der anschließende zweite Ablösevorgang ebenfalls im wesentlichen symmetrisch zur Mittelebene erfolgt. Diese Ausbildung hat auch zur Folge, dass der Unterdruck in dem Innenbeutel gering ist, so dass die Gefahr von Undichtigkeit und von Permeation in den Innenbeutel sinkt.

Der Übergang von der Wanddicke im Bereich der Schnittlinien zu den verdünnten Bereichen kann nahezu sprunghaft sein, d.h. die Wanddickenverringerung erfolgt auf einer sehr kurzen Länge, wobei der anschließende Umfangsabschnitt eine verringerte, konstante Dicke haben kann. Die Wand des Innenbeutels kann sich aber auch stetig bis zu einem Minimalwert verringern, der um etwa 90° versetzt zu der Ebene der Bodenschweißnaht liegt.

In einer zweiten erfinderischen Ausführung ist vorgesehen, dass sich die Wanddicke des Innenbeutels von den Schnittlinien aus kontinuierlich verringert. Auch hierdurch wird ein weitgehend symmetrisches Zusammenfalten des Innenbeutels erreicht.

In einer dritten erfinderischen Ausführung hat die Wand des Innenbeutels an mindestens vier Stellen ihres Umfangs, die paarweise symmetrisch zu der Ebene der Bodenschweißnaht liegen, rippenartige Verdickungen. Dabei haben alle Verdickungen denselben Abstand von den zugehörigen Schnittlinien.

Die Wandstärke des Innenbeutels kann dabei abgesehen von den rippenartigen Verdickungen in Umfangsrichtung konstant sein, oder sie ist im Bereich der Schnittlinien bis zu den zugehörigen beiden Verdickungen größer als in den beiden anderen Bereichen, an denen der Ablösevorgang von dem Außenbehälter beginnt. Die Verdickungen können dabei eine kreisbogenförmige Innenkontur haben.

Durch geeignete Wahl der Abmessungen, die vor allem von der Behältergröße, der Behälterform und von den verwendeten Materialien abhängt, lässt sich erreichen, dass der Ablösevorgang in einem ersten Schritt nur bis zu den jeweiligen rippenförmigen Verdickungen der beiden Seiten erfolgt. Im weiteren Verlauf der Abgabe von Behälterinhalt heben dann auch die rippenförmigen Verdickungen und die anschließenden Umfangsabschnitte von der Wand des Außenbehälters ab, so dass sich der Innenbeutel flach in der Mitte des Außenbehälters im Bereich der Ebene der Bodenschweißnaht zusammen legt. Auch hierbei verbleibt nur eine verschwindend kleine Restmenge der Behälterflüssigkeit in dem Innenbeutel, die nicht ausbringbar ist.

Wie oben erwähnt, hängt die Wahl der Dicke der einzelnen Bereiche des Innenbeutels von vielen Faktoren ab, u.a. von der Größe und der Form des Behälters und von den verwendeten Materialien. Als Material für den Außenbehälter kommen z.B. PET und PCTG für klarsichtige Behälter und Polyolefine oder andere Thermoplasten für nicht klarsichtige Behälter in Betracht, während der Innenbeutel einschichtig oder mehrschichtig sein kann und beispielsweise aus SURLYN, EVOH, SURLYN als Dreischichtinnenbeutel bestehen kann. Der Behälter kann querschnittlich eine kreisrunde, aber auch ovale oder rechteckige Form haben, wobei ein symmetrischer Ablösevorgang bei der kreiszylindrischen Form bisher die größten Probleme mit sich gebracht hat.

Der Innenbeutel kann bei der obigen ersten Variante z.B. eine Dicke von 0,15 bis 0,25 mm haben und dabei - ebenfalls nur als Beispiel - aus drei Materialschichten von jeweils 0,05 mm Dicke mit dazwischen liegenden Klebeschichten (ebenfalls 0,05 mm) bestehen. Wenn dies die Dicke im Bereich der durch die Bodenschweißnaht gehenden Mittelebene ist, kann die Wanddicke an der dünnsten Stelle beispielsweise 0,05 bis 0,08 mm dünner sein.

Wenn bei der zweiten Variante beispielsweise die Wanddicke des Innenbeutels über den Umfang konstant 0,15 mm beträgt, kann sie an den Rippen 0,2 bis 0,25 mm betragen.

Es hat sich gezeigt, dass die Ausbildung der Rippen keinen nachteiligen Einfluss auf die Ausbildung der Bodenschweißnaht hat, so dass der Innenbeutel hier dicht verschließbar ist.

Die Druckausgleichsöffnungen sind vorteilhafterweise um 90° zu den Schnittlinien versetzt ausgebildet. Hierauf ist die Erfindung aber nicht beschränkt, sondern es können beispielsweise auch zwei in Umfangsrichtung voneinander beabstandete Druckausgleichsöffnungen auf jeder Seite vorgesehen sein, die paarweise um jeweils ca. 80° zu den Schnittlinien versetzt sein können. Es können auch mehrere Druckausgleichsöffnungen im Abstand übereinander liegend auf jeder Seite der Bodenschweißnaht ausgebildet sein.

Der erfindungsgemäße Behälter kann auch ein sogenannter Weithalsbehälter sein, da die Druckausgleichsöffnungen an jeder beliebigen Stelle des Außenbehälters ausgebildet sein können.

Weitere Einzelheiten der Erfindung ergeben sich aus der nachfolgenden Beschreibung zweier Ausführungsformen der Erfindung. Dabei zeigen auf ein schematische Weise:
- Figur 1: einen Vertikalschnitt durch einen Behälter mit Innenbeutel,
- Figuren 2A bis 2c: eine Ausführungsform mit einem Innenbeutel mit rippenartigen Verdickungen und
- Figuren 3A bis 3C: eine Ausführungsform mit Versteifungsbereichen an den Schnittlinien.

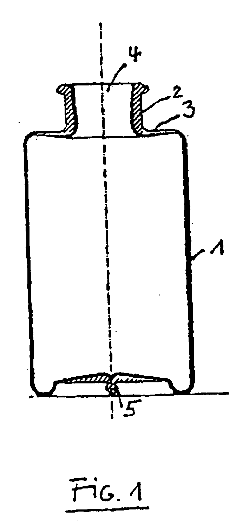

Der in Figur 1 dargestellte Behälter 1 enthält einen Behälterhals 2 und einen Schulterabschnitt 3. An der Behälteröffnung 4 kann eine Pumpe zum ausbringen des Behälterinhalts befestigt sein, ohne dass die Erfindung hierauf beschränkt ist. Der Behälter kann auch als Quetschflasche ausgestaltet sein, bei der die Behälterwand von Hand zur Abgabe des Behälterinhalts zusammengedrückt wird, und der Behälter kann auch ein sogenannter Weithalsbehälter ohne Schulterabschnitt sein.

Am Boden des Behälters ist - bevorzugt infolge des Schließens der Blasform - ein vorstehender, querschnittlich etwa drachenförmiger Steg ausgebildet, in dessen in der Figur unterem Bereich sich die Materialschichten des Außenbehälters berühren, da sich in dem Formhohlraum des Steges die beiden abgequetschten Materialschichten des Innenbeutels ein wenig von der Trennstelle nach oben zurückgezogen haben. Die beim Abquetschvorgang gebildete Schweißnaht des Innenbeutels ist in dem oberen Bereich des Stegs 5 eingeklemmt und damit in axialer Richtung gehalten.

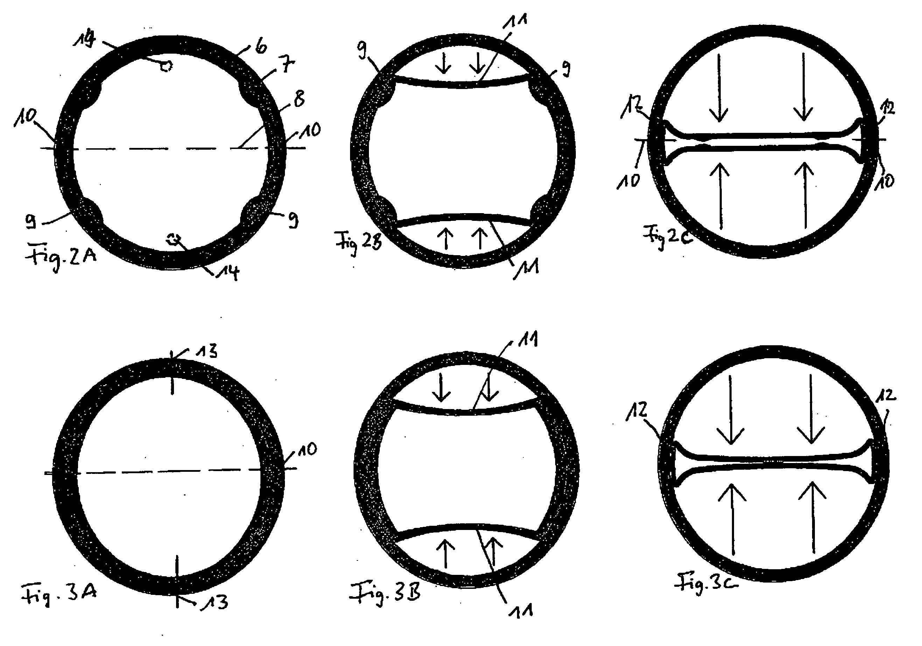

Die Figur 2A zeigt den Ausgangszustand einer ersten Ausführungsform, bei der der Innenbeutel 6 mit seinem gesamten Umfang an der Innenseite des Außenbehälters 7 anliegt. Mit dem Bezugszeichen 8 ist die Ebene gekennzeichnet, die durch die Bodenschweißnaht und durch die Mittellängsachse des Behälters verläuft. Der Innenbeutel 6 hat eine konstante Wanddicke mit Ausnahme von vier rippenartigen Verdickungen 9, deren Innenkontur querschnittlich kreisbogenförmig ist und die von den Schnittlinien 10 zwischen der Ebene 8 und dem Außenbehälter 7 (sowie dem Innenbeutel 6) denselben Umfangsabstand haben. Mit dem Bezugszeichen 14 sind zwei Druckausgleichsöffnungen angedeutet.

Bei Abgabe von Behälterinhalt löst sich der Innenbeutel 6 zunächst beidseitig (meist zeitlich aufeinander folgend) in den mit 11 bezeichneten Bereichen von der Wand des Außenbehälters 7 ab, und zwar bis zu den rippenartigen Verdickungen 9. Dies wird durch geeignete Wahl der Wandstärke des Innenbeutels 6 erreicht.

Im Verlaufe des weiteren Ausbringens von Behälterinhalt stellt sich die in Figur 1C dargestellte Konfiguration ein, bei der der Innenbeutel 1 nur noch in einem kleinen Bereich 12 um die Schnittlinien 10 herum in Anlage an dem Außenbehälter 7 verbleibt. Der Ablösevorgang des Innenbeutels vollzieht sich weitestgehend symmetrisch zur Mittelebene.

Bei der in den Figuren 3A bis 3C dargestellten Ausführungsform verringert sich die Wanddicke des Innenbeutels 6 kontinuierlich von dem Bereich der Schnittlinien 10 bis zu den um 90° versetzten Schnittlinien 13. Durch geeignete Wahl des Verlaufs der Wanddicke in Umfangsrichtung wird wiederum erreicht, dass sich zunächst die beiden gegenüber liegenden Umfangsbereiche 1 1 von der Wand des Außenbehälters lösen, woraufhin sich der Ablösevorgang bis zum Zustand der Figur 3C fortsetzt, in dem wiederum nur kleine gegenüber liegende Umfangsbereiche 12 an der Wand des Außenbehälters 7 anhaften.

Vor dem Befüllen des Innenbeutels wird dieser durch Aufbringen eines Unterdrucks teilweise von dem Außenbehälter 7 gelöst und dann durch Aufbringen eines Überdrucks wieder an die Wand des Außenbehälters angelegt. Dieser vorangehende Ablösevorgang vollzieht sich auf entsprechende Weise.

Es wird betont, dass die Erfindung nicht auf die beschriebenen und dargestellten Ausführungsformen beschränkt ist. Vielmehr sind alle offenbarten Merkmale der drei Ausführungsformen auch einzeln untereinander anders als oben beschrieben miteinander kombinierbar.

## Patentansprüche

1. Im Coextrusionsblasverfahren hergestellter Behälter bestehend aus einem im wesentlichen steifen Außenbehälter und einem leicht verformbaren Innenbeutel aus jeweils verschiedenartigen, keine Schweißverbindung miteinander eingehenden, thermoplastischen Kunststoffen, mit einer Behälteröffnung und mit wenigstens zwei Druckausgleichsöffnungen in der Wand des Außenbehälters zum Druckausgleich im Zwischenraum zwischen dem Außenbehälter und dem Innenbeutel bei Kontraktion des Innenbeutels, wobei beim Abquetschen von Überschußmaterial am Boden der Blasform der Innenbeutel durch eine Bodenschweißnaht verschlossen und diese Bodenschweißnaht in eine ebenfalls verschlossene Bodenschweißnaht des Außenbehälters eingeklemmt ist, wobei zu beiden Seiten der Bodenschweißnaht wenigstens eine Druckausgleichsöffnung ausgebildet ist und alle Druckausgleichsöffnungen an Stellen des Außenbehälters ausgebildet sind, die gegenüber den Schnittlinien einer durch die Bodenschweißnaht und die Längsmittelachse des Behälters verlaufenden Ebene mit der Umfangswand des Außenbehälters und des Innenbeutels in Umfangsrichtung versetzt sind, so dass bei Abgabe des Behälterinhalts der Innenbeutel sich nur von zwei Seiten zusammenzieht
**dadurch gekennzeichnet,**
**dass** die Wanddicke des Innenbeutels (6) im Bereich der Schnittlinien (10) größer als in den dazwischen liegenden Umfangsbereichen ist, wobei die Wanddicke beidseitig der Schnittlinien (10) über einen vorgegebenen Umfangsabschnitt im wesentlichen konstant ist und sich dann stetig oder sprunghaft verringert.

2. Im Coextrusionsblasverfahren hergestellter Behälter, bestehend aus einem im wesentlichen steifen Außenbehälter und einem leicht verformbaren Innenbeutel aus jeweils verschiedenartigen, keine Schweißverbindung miteinander eingehenden, thermoplastischen Kunststoffen, mit einer Behälteröffnung und mit wenigstens zwei Druckausgleichsöffnungen in der Wand des Außenbehälters zum Druckausgleich im Zwischenraum zwischen dem Außenbehälter und dem Innenbeutel bei Kontraktion des Innenbeutels, wobei beim Abquetschen von Überschußmaterial am Boden der Blasform der Innenbeutel durch eine Bodenschweißnaht verschlossen und diese Bodenschweißnaht in eine ebenfalls verschlossene Bodenschweißnaht des Außenbehälters eingeklemmt ist, wobei zu beiden Seiten der Bodenschweißnaht wenigstens eine Druckausgleichsöffnung ausgebildet ist und alle Druckausgleichsöffnungen an Stellen des Außenbehälters ausgebildet sind, die gegenüber den Schnittlinien einer durch die Bodenschweißnaht und die Längsmittelachse des Behälters verlaufenden Ebene mit der Umfangswand des Außenbehälters und des Innenbeutels in Umfangsrichtung versetzt sind, so dass bei Abgabe des Behälterinhalts der Innenbeutel sich nur von zwei Seiten zusammenzieht
**dadurch gekennzeichnet,**
**dass** die Wanddicke des Innenbeutels (6) im Bereich der Schnittlinien (10) größer als in den dazwischen liegenden Umfangsbereichen ist,
wobei sich die Wanddicke von den Schnittlinien (10) aus kontinuierlich verringert.

3. Im Coextrusionsblasverfahren hergestellter Behälter, bestehend aus einem im wesentlichen steifen Außenbehälter und einem leicht verformbaren Innenbeutel aus jeweils verschiedenartigen, keine Schweißverbindung miteinander eingehenden, thermoplastischen Kunststoffen, mit einer Behälteröffnung und mit wenigstens zwei Druckausgleichsöffnungen in der Wand des Außenbehälters zum Druckausgleich im Zwischenraum zwischen dem Außenbehälter und dem Innenbeutel bei Kontraktion des Innenbeutels, wobei beim Abquetschen von Überschußmaterial am Boden der Blasform der Innenbeutel durch eine Bodenschweißnaht verschlossen und diese Bodenschweißnaht in eine ebenfalls verschlossene Bodenschweißnaht des Außenbehälters eingeklemmt ist, wobei zu beiden Seiten der Bodenschweißnaht wenigstens eine Druckausgleichsöffnung ausgebildet ist und alle Druckausgleichsöffnungen an Stellen des Außenbehälters ausgebildet sind, die gegenüber den Schnittlinien einer durch die Bodenschweißnaht und die Längsmittelachse des Behälters verlaufenden Ebene mit der Umfangswand des Außenbehälters und des Innenbeutels in Umfangsrichtung versetzt sind, so dass bei Abgabe des Behälterinhalts der Innenbeutel sich nur von zwei Seiten zusammenzieht, **dadurch gekennzeichnet,**
**dass** die Wand des Innenbeutels (6) an mindestens 4 Stellen ihres Umfangs, die paarweise symmetrisch zu der Ebene liegen, rippenartige Verdickungen (9) aufweist.

4. Behälter nach Anspruch 3,
**dadurch gekennzeichnet,**
**dass** alle Verdickungen (9) denselben Abstand von der Ebene haben.

5. Behälter nach einem der Ansprüche 1 bis 4,
**dadurch gekennzeichnet,**
**dass** der Außenbehälter (7) aus einem durchsichtigen Material besteht.

6. Behälter nach einem der Ansprüche 1 bis 5,
**dadurch gekennzeichnet,**
**dass** wenigstens jeweils eine Druckausgleichsöffnung um etwa 90° versetzt zu den Schnittlinien ausgebildet ist.

## Claims

1. A container produced in a coextrusion blow moulding method consisting of a substantially rigid outer container and a readily deformable inner bag of different thermoplastic plastic materials, which do not form a welded connection with one another, with a container opening and with at least two pressure balancing openings in the wall of the outer container for the purpose of pressure balance in the gap between the outer container and the inner bag on contraction of the inner bag, wherein, when excess material is squeezed out at the base of the blow mould the inner bag is sealed by a base weld seam and this base weld seam is clamped in a base weld seam, which is also sealed, of the outer container, wherein at least one pressure balancing opening is formed on both sides of the base weld seam and all the pressure balancing openings are formed at positions on the outer container which are offset with respect to the intersection lines of a plane extending through the base weld seam and the longitudinal central axis of the container with the peripheral wall of the outer container and of the outer bag in the peripheral direction so that when the content of the container is dispensed the inner bag contracts only from two sides, **characterised in that** the wall thickness of the inner bag (6) in the vicinity of the intersection lines (10) is greater than in peripheral regions situated between them, whereby the wall thickness on both sides of the intersection lines is substantially constant over a predetermined peripheral section and then decreases constantly or abruptly.

2. A container produced in a coextrusion blow moulding method consisting of a substantially rigid outer container and a readily deformable inner bag of different thermoplastic plastic materials, which do not form a weld connection with one another, with a container opening and with at least two pressure balancing openings in the wall of the outer container for the purpose of pressure balance in the gap between the outer container and the inner bag on contraction of the inner bag, wherein, when excess material is squeezed out at the base of the blow mould the inner bag is sealed by a base weld seam and this base weld seam is clamped in a base weld seam, which is also sealed, of the outer container, wherein at least one pressure balancing opening is formed on both sides of the base weld seam and all the pressure balancing openings are formed at positions on the outer container which are offset with respect to the intersection lines of a plane extending through the base weld seam and the longitudinal central axis of the container with the peripheral wall of the outer container and of the outer bag in the peripheral direction so that when the content of the container is dispensed the inner bag contracts only from two sides, **characterised in that** the wall thickness of the inner bag (6) in the region of the intersection lines (10) is larger than in the peripheral regions situated between them, wherein the wall thickness decreases continuously from the intersection lines (10).

3. A container produced in a coextrusion blow moulding method consisting of a substantially rigid outer container and a readily deformable inner bag of different thermoplastic plastic materials, which do not form a welded connection with one another, with a container opening and with at least two pressure balancing openings in the wall of the outer container for the purpose of pressure balance in the gap between the outer container and the inner bag on contraction of the inner bag, wherein, when excess material is squeezed out at the base of the blow mould the inner bag is sealed by a base weld seam and this base weld seam is clamped in a base weld seam, which is also sealed, of the outer container, wherein at least one pressure balancing opening is formed on both sides of the base weld seam and all the pressure balancing openings are formed at positions on the outer container which are offset with respect to the intersection lines of a plane extending through the base weld seam and the longitudinal central axis of the container with the peripheral wall of the outer container and of the outer bag in the peripheral direction so that when the content of the container is dispensed the inner bag contracts only from two sides, **characterised in that** the wall of the inner bag (6) includes rib-like thickened portions (9) at at least four positions on its periphery, which are situated in pairs symmetrically with respect to the plane.

4. A container as claimed in Claim 3, **characterised in that** all the thickened portions (9) have the same spacing from the plane.

5. A container as claimed in one of Claims 1 to 4, **characterised in that** the outer container (7) consists of a transparent material.

6. A container as claimed in one of Claims 1 to 5, **characterised in that** at least one pressure balancing opening is formed offset through about 90° from the intersection lines.

## Revendications

1. Contenant fabriqué selon le procédé de coextrusion par soufflage, constitué d'un contenant extérieur sensiblement rigide et d'un sac intérieur aisément déformable fait de matières thermoplastiques respectivement hétérogènes et n'établissant pas de liaison soudée l'une avec l'autre, comprenant une ouverture de contenant et au moins deux orifices de compensation de pression dans la paroi du contenant extérieur permettant une compensation de pression dans l'espace intermédiaire entre le contenant extérieur et le sac intérieur lors de la contraction du sac intérieur, le sac intérieur, lors de l'écrasement d'une matière excédentaire sur le fond du moule de soufflage, étant fermé par un cordon de soudure de fond et ce cordon de soudure de fond étant coincé dans un cordon de soudure de fond également fermé du contenant extérieur, au moins un orifice de compensation de pression étant formé de part et d'autre du cordon de soudure de fond, et tous les orifices de compensation de pression étant formés aux endroits du contenant extérieur qui sont décalés dans la direction périphérique par rapport aux lignes d'intersection d'un plan s'étendant à travers le cordon de soudure de fond et l'axe central longitudinal du contenant, avec la paroi périphérique du contenant extérieur et du sac intérieur, de telle manière que, lors de la distribution du contenu du contenant, le sac intérieur ne se contracte qu'à partir des deux côtés,
**caractérisé en ce**
**que** l'épaisseur de paroi du sac intérieur (6) dans la zone des lignes d'intersection (10) est supérieure à l'épaisseur dans les zones périphériques situées entre les lignes d'intersection, l'épaisseur de paroi de part et d'autre des lignes d'intersection (10) étant sensiblement constante sur toute l'étendue d'une partie périphérique prédéfinie et diminuant ensuite progressivement ou brutalement.

2. Contenant fabriqué selon le procédé de coextrusion par soufflage, constitué d'un contenant extérieur sensiblement rigide et d'un sac intérieur aisément déformable fait de matières thermoplastiques respectivement hétérogènes et n'établissant pas de liaison soudée les unes avec les autres, comprenant une ouverture de contenant et au moins deux orifices de compensation de pression dans la paroi du contenant extérieur permettant une compensation de pression dans l'espace intermédiaire entre le contenant extérieur et le sac intérieur lors de la contraction du sac intérieur, le sac intérieur, lors de l'écrasement d'une matière excédentaire sur le fond du moule de soufflage, étant fermé par un cordon de soudure de fond et ce cordon de soudure de fond étant coincé dans un cordon de soudure de fond également fermé du contenant extérieur, au moins un orifice de compensation de pression étant formé de part et d'autre du cordon de soudure de fond, et tous les orifices de compensation de pression étant formés aux endroits du contenant extérieur qui sont décalés dans la direction périphérique par rapport aux lignes d'intersection d'un plan s'étendant à travers le cordon de soudure de fond et l'axe central longitudinal du contenant avec la paroi périphérique du contenant extérieur et du sac intérieur, de telle manière que, lors de la distribution du contenu du contenant, le sac intérieur ne se contracte qu'à partir des deux côtés,
**caractérisé en ce**
**que** l'épaisseur de paroi du sac intérieur (6) dans la zone des lignes d'intersection (10) est supérieure à l'épaisseur dans les zones périphériques situées entre les lignes d'intersection, l'épaisseur de paroi diminuant en continu à partir des lignes d'intersection (10).

3. Contenant fabriqué selon le procédé de coextrusion par soufflage, constitué d'un contenant extérieur sensiblement rigide et d'un sac intérieur aisément déformable fait de matières thermoplastiques respectivement hétérogènes et n'établissant pas de liaison soudée les unes avec les autres, comprenant une ouverture de contenant et au moins deux orifices de compensation de pression dans la paroi du contenant extérieur permettant une compensation de pression dans l'espace intermédiaire entre le contenant extérieur et le sac intérieur lors de la contraction du sac intérieur, le sac intérieur, lors de l'écrasement d'une matière excédentaire sur le fond du moule de soufflage, étant fermé par un cordon de soudure de fond et ce cordon de soudure de fond étant coincé dans un cordon de soudure de fond également fermé du contenant extérieur, au moins un orifice de compensation de pression étant formé de part et d'autre du cordon de soudure de fond, et tous les orifices de compensation de pression étant formés aux endroits du contenant extérieur qui sont décalés dans la direction périphérique par rapport aux lignes d'intersection d'un plan s'étendant à travers le cordon de soudure de fond et l'axe central longitudinal du contenant avec la paroi périphérique du contenant extérieur et du sac intérieur, de telle manière que, lors de la distribution du contenu du contenant, le sac intérieur ne se contracte qu'à partir de deux côtés,
**caractérisé en ce**
**que** la paroi du sac intérieur (6) comprend en au moins 4 endroits de sa périphérie, qui se situent par paire de manière symétrique au plan, des épaississements (9) du type nervure.

4. Contenant selon la revendication 3, **caractérisé en ce**
**que** tous les épaississements (9) présentent le même écart par rapport au plan.

5. Contenant selon l'une quelconque des revendications 1 à 4,
**caractérisé en ce**
**que** le contenant extérieur (7) est constitué d'un matériau transparent.

6. Contenant selon l'une quelconque des revendications 1 à 5,
**caractérisé en ce**
**qu'**au moins respectivement un orifice de compensation de pression est décalé d'environ 90° des lignes d'intersection.
